# EUROPEAN PATENT SPECIFICATION

(11) **EP 4 409 371 B1**
(45) Date of publication and mention of the grant of the patent: **25.06.2025**
(21) Application number: 22792933.8
(22) Date of filing: 30.09.2022
(51) Int. Cl.: G05D 1/00

(54) **METHOD, LOCALIZATION CONTROLLER AND VEHICLE IN A MINING ENVIRONMENT**
VERFAHREN, LOKALISIERUNGSSTEUERGERÄT UND FAHRZEUG IN EINER BERGBAUUMGEBUNG
PROCÉDÉ, DISPOSITIF DE COMMANDE DE LOCALISATION ET VÉHICULE DANS UN ENVIRONNEMENT MINIER

(30) Priority: 01.10.2021 SE 2151213
(43) Date of publication of application: 07.08.2024
(73) Proprietor: Epiroc Rock Drills Aktiebolag, 701 91 Örebro (SE)
(72) Inventor: LANDMARK, Nicklas, 719 30 Vintrosa (SE); ÖKVIST, Andreas, 711 91 Lindesberg (SE); KALANDER, Jan, 702 18 Örebro (SE); KODZAGA, Ermin, 703 41 Örebro (SE)
(74) Representative: Epiroc Rock Drills AB
(86) International application number: PCT/SE2022/050873
(87) International publication number: WO 2023/055281

(56) References cited:
- WO-A1-2013/166093
- US-A1- 2018 074 201

## Description

### TECHNICAL FIELD

Embodiments herein relate to a vehicle, a localization controller and methods therein. In some aspects, they relate to handling control of a vehicle operating in a mining environment.

### BACKGROUND

In mining and tunneling, there is a constant ongoing process of improving efficiency, productivity and safety. Examples of changes and/or improvements that are carried out with an increasing extent, especially in mining, is the automation, fully or partly, of various processes occurring in mining. Methods for localization, mapping, control and motion planning have enabled development and deployment of fully or partly autonomous vehicles and/or mobile machines, hereinafter denoted as vehicle.

Traffic management systems (TMS) are used in different applications mainly to prevent collisions and/or to optimize traffic flow. Depending on the application where it is used the traffic management system may be more or less sophisticated, but all applications have in common that they need a reliable localization of each vehicle that is controlled. A reliable localization may in many situations be retrieved from a global positioning system (GPS) unit but this is not a solution for underground environments.

In underground applications an existing solution is to use sensors on a vehicle to estimate a position by estimating the movement of the vehicle from a known position. In a second step the estimated position is verified by comparing data from a global mine map with actual tunnel walls around the vehicle that are derived from sensor data. A slight deviation between expected position and actual position can be handled by the system resulting in that a corrected position is sent as input to an iterative loop.

The current solution has shown not to be reliable in all situations. Depending on the situation it has been noticed that:
- Sensors used for estimating the movement of the vehicle may report faulty measurements causing the expected position to deviate from the actual position.
- Sensors used to retrieve sensor data relating to the actual tunnel walls may report faulty values.
- The global mine map may not be correct compared to the reality. This is natural and an expected condition since mining is about excavating ore which constantly changes the surrounding within a mine.

The above issues may result in an unreliable localization of a vehicle used in underground mining. Reliable localization of vehicles is even more important when the vehicles are part of fleet of vehicles operating in the same area. An unreliable localization of a vehicle may increase the risk of collisions with surroundings as well with other vehicles in the fleet.

An example of localization technique for mining vehicles is disclosed in the patent application US 2008/0074201 A1.

### SUMMARY

As part of developing embodiments herein a problem has been identified and will first be discussed.

Existing solutions to decrease the risk of collisions when the localization is determined as unreliable for one vehicle in a fleet of vehicles, comprise stopping all vehicles in the fleet of vehicles. Stopping the entire fleet of vehicles may have a negative impact on production and will increase exponentially with the amount of vehicles used simultaneously in the fleet of vehicles.

An object of embodiments herein is to provide a mechanism that increases the efficiency of operating one or more vehicles in a mining environment.

According to an aspect of embodiments herein, the object is achieved by a method performed by a localization controller for handling control of a vehicle operating in a mining environment. The vehicle is a member of a fleet of vehicles.
The localization controller obtains a location of the vehicle and/or of another vehicle in the fleet of vehicles. When determining that the obtained location is unreliable, the localization controller obtains at least one operational rule from a set of predetermined operational rules. The at least one operational rule is selected from the set of predetermined operational rules based on whether one or more conditions are fulfilled or not. The one or more conditions comprises one or more out of a type of operation being performed by the vehicle, a type of operation being performed by another vehicle in the fleet of vehicles, a type of vehicle, and a type of vehicle of another vehicle in the fleet of vehicles. The localization controller operates the vehicle and/or another vehicle in the fleet of vehicles in accordance with the at least one operational rule.

According to another aspect of embodiments herein, the object is achieved by a localization controller configured to handle control of a vehicle adapted to operate in a mining environment. The vehicle is a member of a fleet of vehicles. The localization controller comprises memory operable to store instructions and processing circuitry operable to execute the instructions. By executing the instructions, the localization controller is operable to obtain a location of the vehicle and/or of another vehicle in the fleet of vehicles. The localization controller is further operable to, when determining that the obtained location is unreliable, obtain at least one operational rule from a set of predetermined operational rules. The at least one operational rule is adapted to be selected from the set of predetermined operational rules based on whether one or more conditions are fulfilled or not. The one or more conditions is adapted to comprise one or more out of a type of operation being performed by the vehicle, a type of operation being performed by another vehicle in the fleet of vehicles, a type of vehicle, and a type of vehicle of another vehicle in the fleet of vehicles. The localization controller is further operable to operate the vehicle and/or another vehicle in the fleet of vehicles in accordance with the obtained at least one operational rule.

According to another aspect of embodiments herein, the object is achieved by a vehicle adapted to operate in a mining environment. The vehicle is adapted to be part of a fleet of vehicle. The vehicle is adapted to comprise a localization controller according to embodiments herein.

It is furthermore provided herein a computer program comprising instructions, which, when executed on at least one processor, cause the at least one processor to carry out the method above, as performed by the localization controller. It is additionally provided herein a computer-readable storage medium, having stored thereon a computer program comprising instructions which, when executed on at least one processor, cause the at least one processor to carry out the method above, as performed by the localization controller.

Since the controller node obtains the location of the vehicle and/or of another vehicle in the fleet of vehicles, it is possible for the localization controller to determine that the obtained location is unreliable. The localization controller obtains at least one operational rule by selecting the at least one operational rule from a set of predetermined rules based on one or more conditions being fulfilled. The localization controller operates the vehicle and/or another vehicle in the fleet of vehicle in accordance with the obtained at least one operational rule. This way a flexible handling of control of vehicles operating in a mining environment is achieved.

Embodiments herein bring an advantage of improved handling of control of one or more vehicles operating in a mining environment. This is achieved by making it possible to operate the vehicle in accordance with the at least one obtained rule when a vehicle in the mining environment suffers from an unreliable location. The at least one obtained rule is selected based on one or more conditions being fulfilled, which leads to improved flexibility during operational control of one or more vehicles in a mining environment. This in its turn leads to an increased efficiency when operating one or more vehicles in the mining environment.

For example, during specific tasks performed by a vehicle, continued operation may be allowed without compromising safety even when a location of the vehicle itself and/or the location of another vehicle in the fleet of vehicles is determined to be unreliable, e.g., by operating under one or more restrictions according to corresponding operational rules. Thus, the problem of unreliable localization resulting in a complete operational stop is overcome.

### BRIEF DESCRIPTIONS OF DRAWINGS

Examples of embodiments herein are described in more detail with reference to attached drawings in which:
- **Fig. 1a**: is a schematic illustration of a vehicle.
- **Fig. 1b**: is a schematic illustration of a mining environment.
- **Fig. 2**: is a flowchart depicting embodiments of a method in a localization controller.
- **Fig. 3a**: is a signaling diagram according to embodiments herein.
- **Fig. 3b**: is a signaling diagram according to embodiments herein.
- **Fig. 4**: is an example of operational rules according to embodiments herein.
- **Figs 5a-b**: are schematic block diagrams illustrating embodiments of a localization controller.

### DETAILED DESCRIPTION

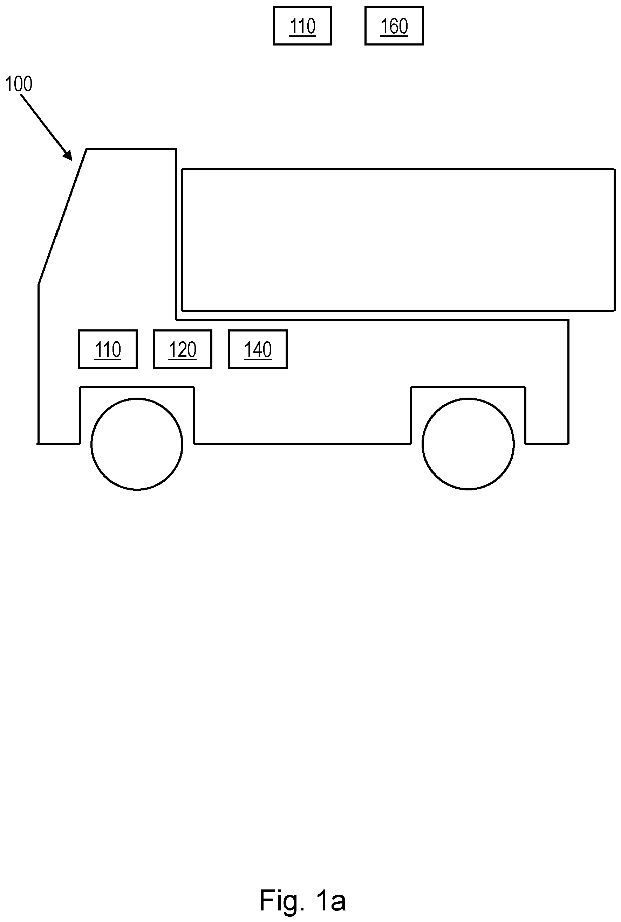

**Fig. 1a** shows **a vehicle 100** adapted to operate in a mining environment. The vehicle 100 is a member of a fleet of vehicles operating in the mining environment. The vehicle may e.g. be a loader, a drill rig, a truck, or other type of mobile mining equipment, machine or vehicle located in the mining environment. The vehicle 100 comprises **a localization controller 110** for handling control of the vehicle 100. The localization controller 110 is configured and/or operable to obtain a location of the vehicle 100 and/or of another vehicle in the fleet of vehicles, and when the obtained location is determined unreliable, the localization controller 110 obtains at least one operational rule from a set of predetermined operational rules and operates the vehicle in accordance with the obtained at least one operational rule. The vehicle 100 may comprise one or more **sensors 120,** e.g. used for determining a location of the vehicle 100. The localization controller 110, also referred to as fleet localization controller, may be located onboard the vehicle 100 operating in the mining environment. The localization controller 110 may handle control of the vehicle 100, e.g. by controlling the operation of the vehicle 100, when the vehicle 100 or other vehicles within the fleet of vehicles has localization issues. In some examples, based on different inputs, e.g. a current ongoing task, such as an operation, performed by the vehicle 100, the localization controller 110 may select an operational rule when location of the vehicle 100 and/or another vehicle in the fleet of vehicles is determined to be unreliable. In other words, the localization controller 110 handles control of the vehicle 100 and/or of another vehicle in the fleet of vehicles by adapting the operation of the vehicle 100, and/or the operation of another vehicle in the fleet of vehicles to different localization issues that may arise. This in order to control the continued operation of the vehicle 100. The operational rule may provide predetermined exceptions to one or more tasks, such as allowed and/or disallowed operations. The localization controller 110 may be configured and/operable to communicate with a **Traffic Management System (TMS) 160.** The TMS 160 may be configured and/or operable to prevent collisions and/or to optimize the traffic flow in the mining environment. The localization controller 110 may be partly and/or completely located in a remote system, e.g., in, or connected to, the TMS 160, and/or in a separate remote system, e.g., in a cloud system and/or a server. In other words, parts of the functionality in the localization controller 110 may be distributed between the localization controller 110 in the vehicle 100 and a localization controller 110 located remotely. Alternatively, all of the functionality in the localization controller 110 may be located remotely, either in one remote system or distributed between more than one remote systems. The vehicle 100 comprises a **vehicle control system 140.** The vehicle control system 140 may be configured and/or operable to operate the vehicle 100, e.g., operate the vehicle to perform tasks and/or operations in the mining environment. The vehicle control system 140 may further control and/or communicate with other systems in the vehicle 100, such as the localization controller 110, and/or with remote systems, nodes or entities, such as the TMS 160, a localization controller partly and/or completely located remotely from the vehicle 100, and/or with other vehicles in the fleet of vehicles.

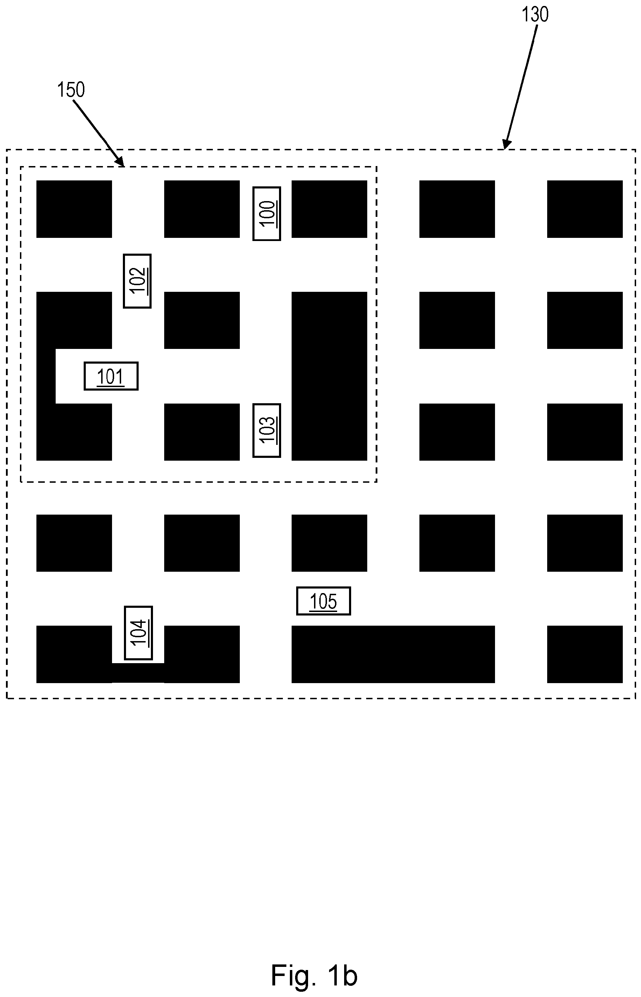

**Fig. 1b** shows a schematic two-dimensional illustration of a **mining environment 130.** Black parts of the mining environment 130 illustrate solid rock and white parts illustrate excavated areas, such as tunnels in the mining environment 130. The mining environment 130 may comprise **one or more predefined subareas 150,** such as safety zones. A safety zone may be referred to as a predefined subarea of the mining environment enclosed by one or more barriers. The one or more barriers may be physical barriers and/or non-physical barriers, e.g., sensors. One or more vehicles may operate in the same safety zone, e.g., in Fig.1b vehicles 100-103 operate in the same safety zone, e.g., the predefined subarea 150. A vehicle located in a safety zone, such as the predefined subarea 150, may be allowed to perform assigned tasks and/or operations while within the safety zone. A vehicle, e.g., any of the vehicles 104-105, may be restricted to enter a safety zone, such as the predefined subarea 150, without explicit permission. One or more fleets of vehicles may operate in the mining environment 130. A fleet of vehicle may comprise all vehicles operating in the mining environment 130, e.g. vehicles 100-105 depicted in Fig. 1b. Alternatively or additionally, a fleet of vehicles may comprise a subset of the vehicles operating in the mining environment. The subset may be all vehicles operating in the same safety zone, such as the vehicles 100-103 operating in the predefined area 150. There is a risk that vehicles, such as autonomous and/or remote-controlled vehicles operating within the same safety zone may collide. This risk may be mitigated by the TMS, such as the TMS 160, through allocation of TMS zones which prevents a vehicle to enter an already occupied TMS zone. One or more TMS zone may be part of, e.g., located within and/or defined in, a safety zone, such as the predefined subarea 150. However, this is dependent on that all vehicles have determined reliable locations and possibility to send location data to the TMS 160 continuously. According to embodiments herein, mechanisms are provided for efficient handling control of vehicles, e.g. vehicles within the same predefined subarea 150 and/or all vehicles operating in the mining environment 130, when a location is determined to be unreliable.

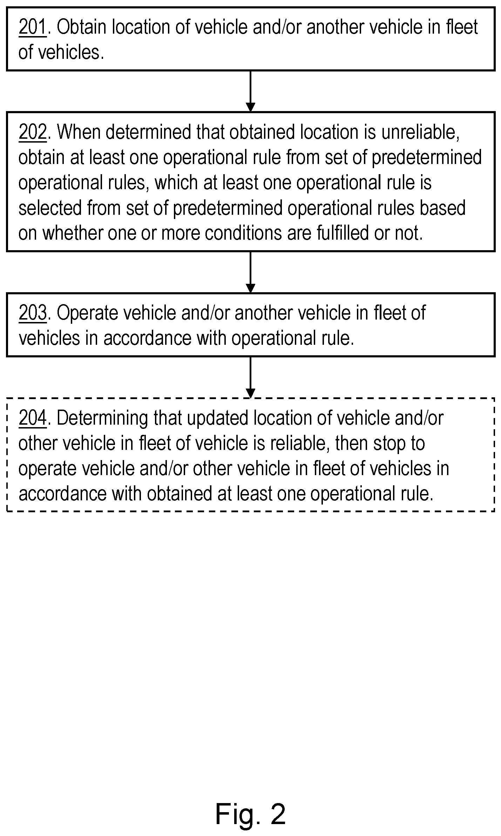

**Fig. 2** shows an example embodiment of a method performed by a localization controller for handling control of a vehicle operating in a mining environment. The vehicle, localization controller and mining environment may be the vehicle 100, localization controller 110 and mining environment 130 described in reference to Figs. 1a and 1b.

The vehicle 100 is a member of the fleet of vehicles. The localization controller 110 may be comprised in the vehicle 100 and/or in other vehicles in the fleet of vehicles. Thus, a plurality of vehicles, e.g., each vehicle, in the fleet of vehicles may comprise a localization controller such as the localization controller 110, or only the vehicle 100 comprises the localization controller 110. In some embodiments, the localization controller 110 is partly or completely located in a remote system, e.g., in, or connected to, the TMS 160, and/or in a separate remote system.

The method comprises the following actions, which actions may be taken in any suitable order. Optional actions are referred to as dashed boxes in Fig. 2.

### Action 201.

The localization controller 110 obtains the location of the vehicle 100 and/or the location of another vehicle in the fleet of vehicles. Obtain when used herein, may mean e.g., receive, select, generate, determine, calculate and/or estimate.

In some embodiments, the localization controller 110 may obtain the location of the vehicle 100 by determining, such as calculating and/or estimating, the location of the vehicle 100. Alternatively or additionally, the localization controller 110 may obtain the location of the vehicle 100 from e.g., a vehicle control system 140, another entity in the vehicle 100 related to determining the location of the vehicle 100, a Traffic Management System (TMS) 160 and/or a remote entity, system and/or node related to determining the location of the vehicle 100 and/or the location of another vehicle in the fleet of vehicles.

In some embodiments, the localization controller 110 may obtain the location of another vehicle in the fleet of vehicles from e.g., the vehicle control system 140 of the other vehicle, another entity in the other vehicle related to determining the location of the other vehicle, the TMS 160 and/or a remote entity, system and/or node related to determining the location of other vehicle in the fleet of vehicles.

The location of the vehicle 100 and/or the location of another vehicle in the fleet of vehicles may be obtained periodically, e.g., at periodic intervals. Alternatively or additionally, the localization controller 110 may obtain the location aperiodically, e.g., by requesting a location update from e.g., the vehicle control system 140 and/or another entity in the vehicle 100 related to determining the location of the vehicle 100.

In some embodiments, obtaining the location of the vehicle 100 and/or the location of another vehicle in the fleet of vehicles, comprises obtaining an indication of the location.

In some embodiments, obtaining the location of the vehicle 100 and/or the location of another vehicle in the fleet of vehicles comprises obtaining an indication indicating that the location of the vehicle 100 and/or the location of the other vehicle is unreliable. The localization controller 110 may determine the location of the vehicle 100 and/or the location of the other vehicle in fleet of vehicles to be unreliable based in the obtained indication. This may mean that instead of obtaining the location explicitly, the localization controller 110 obtains the indication that the location of the vehicle 100 and/or the location of another vehicle in the fleet of vehicles is unreliable. In some examples, obtaining the location comprises that the localization controller 110 obtains both the location, e.g., the explicit location, and the indication indicating that the location is unreliable. The indication may be obtained from the TMS 160. The indication may be obtained together with, e.g. at the same time as, obtaining the location of the vehicle 100 and/or the location of the other vehicle in the fleet of vehicles. Alternatively, the indication may be obtained separately from the obtained location. The indication may, for example, be a specific value, a flag, an index and/or text. Alternatively or additionally, the localization controller 110 may obtain the location and/or the indication that the location of the vehicle 100 is unreliable from an entity in the vehicle 100 related to determining the location of the vehicle 100.

In some embodiments, the indication may comprise an operation performed by the vehicle, e.g., the vehicle 100 and/or another vehicle in the fleet if vehicles, associated with the indication. In an example, the indication indicates that the location of another vehicle in the fleet of vehicles is unreliable. The indication may then further comprise, such as indicate, the operation the other vehicle in the fleet if vehicles performed when the location was determined to be unreliable.

The localization controller 110 may determine the location of the vehicle 100 by obtaining sensor data from the one or more sensors. The sensor data may be obtained, e.g., received, directly from the one or more sensors 120, e.g., the localization controller 110 may be connected to the one or more sensors 120. Alternatively or additionally, the sensor data may be obtained, e.g., received, from the vehicle control system 140 and/or from another entity in the vehicle 100. The sensor data may be obtained periodically, e.g., at periodic intervals. Alternatively or additionally, the localization controller 110 may obtain the sensor data aperiodically, e.g., by requesting the sensor data from e.g. the one or more sensors, the vehicle control system 140 and/or another entity in the vehicle 100. Thus, the sensor data may be used to determine, e.g., calculate and/or estimate, the location of the vehicle 100. The sensor data may comprise one or more of the following: a speed of the vehicle 100, a direction of movement of the vehicle 100, and a distance between the vehicle 100 and one or more surrounding walls and/or obstacles in the mining environment 130. The one or more sensors may be located in the vehicle 100, e.g., the one or more sensors 120, and/or located externally from the vehicle 100, such as one or more fixed sensors in the mining environment 130. The sensor data may be combined with a map of the mining environment 130 to determine the location of the vehicle 100.

In some embodiments, a probability that the location is reliable or unreliable may be calculated based on any one or more out of an operation performed by the vehicle 100, the obtained location of the vehicle 100 and/or a previously obtained location of the vehicle 100. In some examples, the localization controller 110 obtains information that a location is reliable or unreliable, e.g., a probability the location is reliable or unreliable, such as from the TMS 160 and/or from another entity in the vehicle 100, such as the vehicle control system 140 or an entity related to determining the reliability of the location. In other examples, the localization controller 110 is configured to calculate a probability that an obtained location is reliable or unreliable. The localization controller 110 may determine that the location is unreliable using a threshold, e.g., by comparing the obtained or calculated probability to a predetermined threshold value. In some examples, the location is determined to be unreliable when the probability below or equal to the predetermined threshold and reliable when above the predetermined threshold. Alternatively, the location may be determined to be unreliable when the probability is above or equal to the predetermined threshold and reliable when below the predetermined threshold. The predetermined threshold may be a value between 0 and 1. The determining may further be based on the map of the mining environment 130 and/or the sensor data used to obtain the location.

In some embodiments, the localization controller 110 provides, e.g., sends or transmits, the determined location of the vehicle 100 and/or an indication to the TMS 160. The indication may be an unreliable location indication, e.g., the indication indicating that the location of the vehicle 100 is unreliable. The indication may be provided to the TMS 160 together with, e.g., at the same time as, the location of vehicle 100. Alternatively, the indication may be provided to the TMS 160 separately from the location of the vehicle 100. This may allow the TMS 160 to provide the location and/or the indication that the location of the vehicle 100 is unreliable to one or more other vehicles in the fleet of vehicles. Alternatively or additionally, the localization controller 110 provides the determined location of the vehicle 100 and/or the indication that the location of the vehicle 100 is unreliable directly to one more other vehicles in the fleet of vehicles. The indication may, for example, be a specific value, a flag, an index, a status update, an event, an alarm and/or text.

**Action 202.** When the obtained location is determined unreliable, the localization controller 110 obtains at least one operational rule from a set of predetermined operational rules. The at least one operational rule is selected from the set of predetermined operational rules based on whether one or more conditions are fulfilled or not. As mentioned above, obtain when used herein, may mean e.g., receive, select, generate, determine, calculate and/or estimate. This may mean that the at least one operational rule selected for the vehicle 100 may differ from an operational rule applicable for another vehicle in the fleet of vehicles. This since while the vehicle 100 may fulfill some certain conditions, other vehicles in the fleet of vehicles may fulfill other certain conditions. This allows a flexible and efficient handling of control of vehicles operating the mining environment 130. An operational rule when used herein, may mean a rule related to the operation of a vehicle, e.g., the vehicle 100. An operational rule may restrict, or in other ways limit, the vehicle 100 to operate within the boundaries of the operational rule. A condition being fulfilled when used herein may mean that certain parameters, e.g., as described more in detail below, has certain values. A condition may be fulfilled in one or more ways, meaning one or more options may be valid for a condition to be fulfilled.

In some embodiments, the one or more conditions comprises one or more out of:
- a type of operation being performed by the vehicle 100,
- a type of operation being performed by another vehicle and reporting unreliable localization in the fleet of vehicles,
- the type of vehicle of the vehicle 100,
- the type of vehicle of another vehicle in the fleet of vehicle, and
- the unreliable location being related to the vehicle 100 or to another vehicle in the fleet of machines.

The one or more conditions may further comprise, e.g., the type of mining environment, a time since the last reliable location was determined, the location of the last reliable location the method of operating the vehicle and/or the location of more than one vehicle in the fleet of vehicles is determined to be unreliable.

The type of operation may be any operation performed by the vehicle 100 and/or another vehicle in the fleet of vehicles, such as e.g., loading, dumping, scanning, drilling, tramming and/or rock braking etc. The type of vehicle may be any type of vehicle operating in the mining environment 130, such as the vehicles mentioned above, e.g., a loader, a dumper, a drill rig, a truck, or other type of mobile mining equipment, machine or vehicle located in the mining environment. The localization controller 110 may select the at least one operational rule based on any combination of the conditions mentioned above. The combination of conditions may comprise one or more conditions.

A condition may, for example, be that the vehicle 100 is of first type of vehicle and/or that the vehicle 100 performs a first type of operation. Alternatively, or additionally, a condition may be, for example, that another vehicle in the fleet of vehicles performs a second type of operation, the other vehicle in the fleet of vehicles is of second type of vehicle and/or the other vehicle in the fleet of vehicle has reported an unreliable location. The other vehicle in the fleet of vehicle reporting an unreliable location may e.g., mean that an obtained location of another vehicle in the fleet of vehicles is unreliable, and that the other vehicle has reported, such as sent, transmitted or provided, the indication indicating that its location is unreliable to the localization controller 110. E.g., the other vehicle may have determined that its location is unreliable and then reported that its location is unreliable, e.g., by sending, providing or transmitting the indication indicating that its location is unreliable to the localization controller 110, either directly or indirectly via the TMS 160. And, as mentioned above, the localization controller 110 may have obtained the indication indicating that the location of the other vehicle is unreliable, e.g., together with the obtained location of the other vehicle. Since the localization controller 110 selects the at least one operational rule based on the one or more conditions being fulfilled, an improved efficiency in operating one or more vehicles operating in the mining environment 130 is achieved. In an example, the vehicle 100 is of the first type of vehicle, performs a first type of operation and the location of the vehicle 100 is determined to be unreliable. Here, the three conditions being fulfilled is the type of vehicle of the vehicle 100, i.e. the first type of vehicle, the type of operation performed by the vehicle 100, i.e. the first type of operation, and the unreliable location being related to the vehicle 100. Based on these three conditions being fulfilled, the localization controller 110 may select the at least one operational rule.

The at least one operational rule may be obtained from a memory comprised in the localization controller 110 or accessible to the localization controller 110. The memory stores the set of predetermined operational rules.

The set of predetermined operational rules may comprise one or more operational rules. An operational rule may e.g. be related to the speed of movement, a distance a vehicle is allowed to move, a full stop of operation, an approval to continue operations etc. An operational rule may be based on one or more conditions, such as the conditions described above, being fulfilled. For example, the set of predetermined operational rules may comprise one or more operational rules related to a type of vehicle. This may mean that an operational rule, related to a first type of vehicle, is obtained when this condition is fulfilled. E.g., the vehicle the operational rule is obtained for is of the first type of vehicle. In an example, the vehicle 100 is of the vehicle type 'dumper'. Thus, the condition that the vehicle 100 is of the type of vehicle 'dumper' is fulfilled, and the localization controller 110 may select an operational rule from set of predetermined operational rules applicable to vehicle type 'dumper'.

In an example, an operational rule may be that the speed of movement is restricted. The conditions to be fulfilled for the localization controller 110 to select the operational rule may e.g. be that the vehicle, for which the operational rule is obtained, is performing a second type of operation and that the location of said vehicle is unreliable. The second type of operation may e.g. be 'dumping'.

In another example, the operational rule may be to continue the current operation. The conditions to be fulfilled for the localization controller 110 to select the operational rule may e.g. be that the vehicle, for which the operational rule is obtained, is performing a third type of operation and that the location of another vehicle in the fleet of vehicles is unreliable. The third type of operation may e.g. be 'drilling'.

In another example, the operational rule may be to restrict the distance of movement. The condition to be fulfilled for the localization controller 110 to select the operational rule may e.g. be that the vehicle, for which the operational rule is obtained, is of a second type of vehicle. The second type of vehicle may e.g. be a 'dumper'.

In another example, a combination of conditions, e.g., the type of vehicle and type operation performed by the vehicle, for which the operational rule is obtained, forms the basis of selecting the operational rule. The operational rule may be to allow continued operation for one minute, and then stop. The conditions to be fulfilled for the localization controller 110 to select the operational rule may e.g. be that the vehicle is of a first type of vehicle, e.g., a 'loader', that the vehicle performs first type of operation, e.g. 'loading', and the location of the vehicle is determined to be unreliable.

An operational rule may be selected based on both the operation performed by the vehicle the operational is for and the operation performed by another vehicle in the fleet of vehicles. For example, the vehicle, for which the operational rule is obtained, performs a fourth type of operation, e.g., 'tramming', and the other vehicle in the fleet of vehicles performs the second type of operation, e.g., 'dumping'. In this example, the location of the vehicle, for which the operational rule is obtained, is determined to be unreliable and the operational rule may be to stop operation.

The examples described above are to be viewed as examples. Other combinations of conditions may be possible for forming the basis of an operational rule, as well as other combinations of conditions and how they are fulfilled.

The set of predetermined operational rules may be updated and/or changed, e.g., by reconfiguring the set of predetermined operational rules stored in the memory. The localization controller 110 may, for example, obtain a new set of predetermined operational rules from an operator and may store the new set of predetermined operational rules in the memory. Alternatively, the localization controller 110 may obtain an update to the already stored set of predetermined operational rules and may store the update in the memory. An update may, for example, be a new operational rule, removal of an operational rule and/or changes to an operational rule.

In some embodiments, the at least one operational rule comprises one or more allowed and/or disallowed operations. The at least one operational rule may comprise a combination of one or more allowed and disallowed operations. An allowed and/or disallowed operation may be any operation performed by a vehicle in the mining environment 130. A disallowed operation may be related to an allowed operation, such as restricting an allowed operation. For example, if the allowed operation is to continue moving and the disallowed operation is a limit on the speed of movement, the disallowed operation restricts the allowed operation by limiting the speed with which the vehicle 100 may move. The one or more restrictions may be related to e.g. a speed of movement, a distance relative a current location and/or moving into one or more certain areas of the mining environment 130.

In some embodiments, the at least one operational rule comprises a time period. The time period may indicate a duration of time for which the vehicle is to operate in accordance with the at least one operation rule. Hence, one operational rule may be valid for the duration of time indicated by the time period. In other words, the localization controller 110 may operate the vehicle 100 in accordance with the at least one operational rule for the length of time indicated by the time period. In some embodiments, the obtained at least one operational rule may comprise an instruction to obtain and operate the vehicle 100 in accordance with another operational rule when the time period has lapsed. Alternatively or additionally, the obtained at least one operational rule may comprise an instruction to operate the vehicle 100 in accordance with another already obtained operational rule when the time period have lapsed.

An unreliable location of a vehicle, e.g., of the vehicle 100 or of another vehicle in the fleet if vehicles, compromises safety during operation of the vehicles and may result in a collision in the mining environment 130 if not handled.

**Action 203.** Having selected the at least one operational rule, the localization controller 110 operates the vehicle 100 and/or another vehicle in the fleet of vehicles in accordance with the at least one operational rule. For example, the at least one operational rule may indicate that the vehicle 100 may continue operation but with a restricted speed of movement. The localization controller 110 may operate the vehicle 100 and/or another vehicle in the fleet of vehicles by controlling operation in accordance with the at least one operational rule. In some examples, the controlling operation according to the at least one operational rule comprises restricting the speed of movement of the vehicle 100 and/or another vehicle in the fleet of vehicles. For example, the localization controller may control the operation of the vehicle 100 and/or of another vehicle in the fleet of vehicles by e.g. providing the at least one operational rule to the vehicle control system 140 in the vehicle 100 and/or to a vehicle control system in another vehicle in the fleet of vehicles. This may mean that the localization controller 110 controls the operation of the vehicle 100 and/or another vehicle in the fleet of vehicles, e.g., by providing, such as sending and/or transmitting, an indication of the at least one operational rule to an operator controlling the operation of the vehicle 100 and/or of another vehicle in the fleet of vehicles. The indication of the at least one operational rule may, for example, be one or more specific values, one or more indexes, one or more lists, one or more arrays, one or more states of allowed operations and/or text. The operator when used herein may mean e.g. a computer autonomously and/or semi-autonomously controlling the operation of the vehicle 100 and/or the operation of another vehicle in the fleet of vehicles, such as the vehicle control system 140, and/or an operator manually, e.g., remotely and/or from the vehicle 100, controlling the operation of the vehicle 100 and/or the operation of another vehicle in the fleet of vehicles.

In some embodiments, when the obtained at least one operational rule comprises a time period, the localization controller 110 operates, e.g., controls the operation of, the vehicle 100 by stopping the current operation when the time period have lapsed. Alternatively, the localization controller 110 may have obtained more than one operational rule and may operate, e.g. control the operation of, the vehicle 100 in accordance with another of the obtained more than one operational rules when the time period has lapsed. Alternatively or additionally, the localization controller 110 may obtain another at least one operational rule when the time period have lapsed, and operate, e.g., control the operation of, the vehicle 100 in accordance with the other obtained at least one operational rule.

Since a vehicle, e.g., the vehicle 100, may be operated in accordance with the obtained at least one operational rule, selected based on one or more conditions being fulfilled, a more efficient handling of control of the vehicle is achieved. Hence, each vehicle may be operated in accordance with an operational rule individually selected for each vehicle in the fleet of vehicles.

**Action 204.** The localization controller 110 may further determine that an updated location of the vehicle 100 and/or of the other vehicle is reliable. The localization controller 110 may then stop to operate the vehicle 100 and/or the other vehicle in the fleet of vehicles in accordance with the obtained at least one operational rule. In other words, when the localization controller 110 determines that the updated location, e.g. an updated location of the obtained location determined to be unreliable, is reliable, the localization controller 110 may resume normal operation of the vehicle. Thus, when determining that the updated location is reliable, the localization controller 110 may then disregard the obtained at least one operational rule and operate the one or more vehicles according to a normal procedure. Obtaining the updated location, and/or determining that the updated location is reliable, may be done similarly and/or in the same way as described in Action 201.

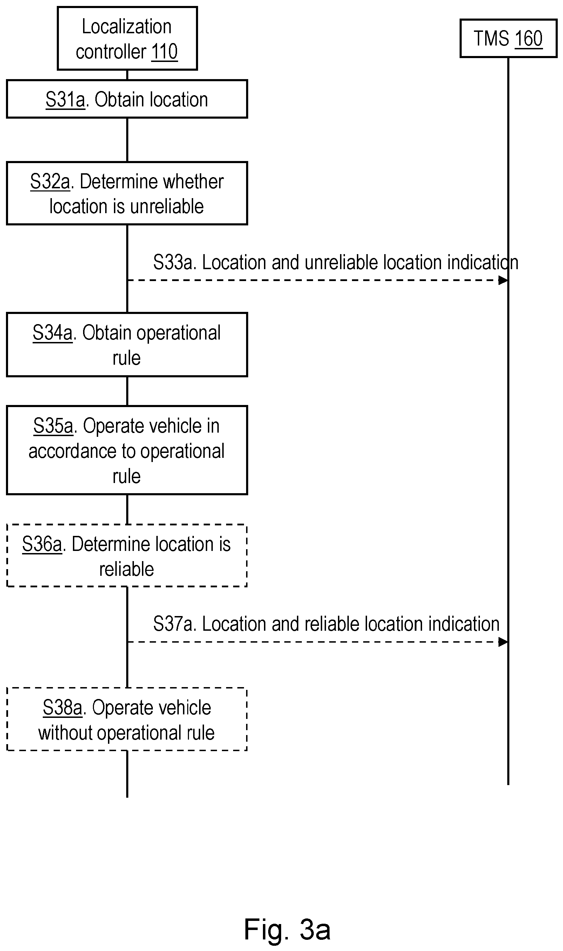

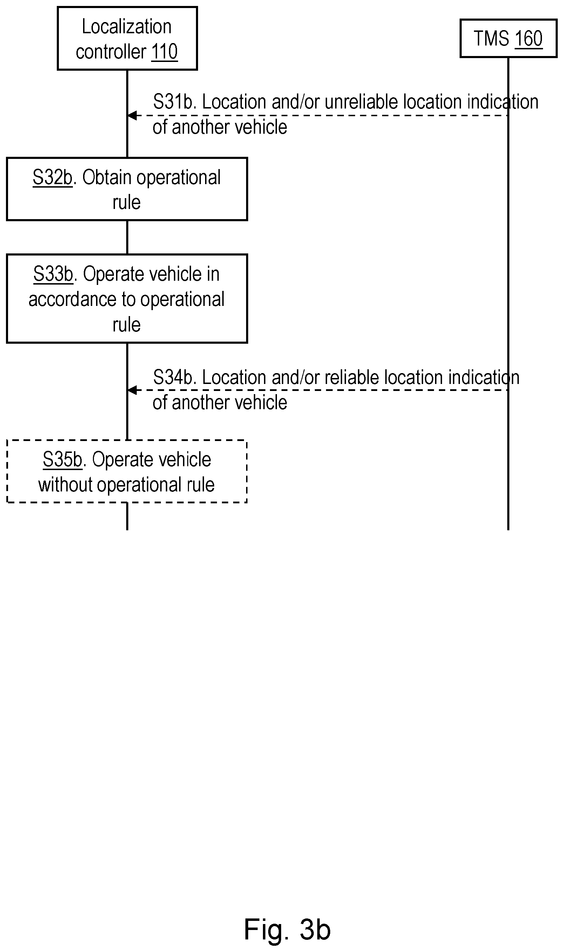

**Figs. 3a** **and b** depict examples of signaling diagrams according to embodiments herein. The signaling diagrams also reflect actions corresponding to those disclosed in the detailed description of Fig. 2. Some of the actions are performed internally by a localization controller 110 as introduced in the detailed description of Fig. 1a, and other actions may reflect input obtained from external systems. Optional actions are referred to as dashed boxes and/or lines in Fig. 3a.

**Fig. 3a** exemplifies embodiments where the localization controller 100 handles control of the vehicle 100 based on an unreliable location of the vehicle 100. The example comprises the following actions, which may be taken in any suitable order.

**S31a.** The localization controller 110 in the vehicle 100 obtains, e.g., receives, generates, determines, calculates and/or estimates, a location of the vehicle 100, e.g., in accordance with Action 201 as described above. The localization controller 110 may, for example, determine the location based on sensor data or similar. Alternatively, the localization controller 110 may obtain an already determined location from the TMS 160 or from another entity in the vehicle 100. Alternatively or additionally, the localization controller 110 obtains an unreliable location indication, e.g., the indication indicating that the location of the vehicle 100 is unreliable, together or separate from the obtained location. This action is related to Action 201 described above.

**S32a.** The localization controller 110 may determine whether the obtained location is unreliable or not, e.g., based on the obtained location and/or the obtained unreliable location indication. This action is related to Action 201 described above.

**S33a.** When determined that obtained location is unreliable, the localization controller 110 may provide, e.g., send, transmit and/or communicate, the determined location to a Traffic Management System (TMS) 160 together with an indication, e.g., the indication indicating that the location of the vehicle 100 is unreliable. This may allow the TMS 160 to provide an indication indicating that the location of the vehicle 100 is unreliable to other vehicles in the fleet of vehicles. This action is related to Action 201 described above.

**S34a.** The localization controller 110 obtains, e.g., selects, receives, generates, determines, an operational rule, being an example of the at least one operational rule, from the set of predetermined operational rules based on one or more conditions being fulfilled. For example, the conditions being fulfilled may be that the vehicle 100 is a first type of vehicle and that the vehicle 100 performs a first type of task or operation. The localization controller 110 obtains the operational rule by selecting the operational rule from the predetermined set of operational rules, taking the fulfilled conditions into account. This action is related to Action 202 described above.

**S35a.** The localization controller 110 operates, such as controls the operation of, the vehicle 100 in accordance with the obtained operational rule and/or rules. For example, the at least one operational rule may indicate that the vehicle 100 may perform its current operation with a restricted speed of movement, e.g., by applying a speed limit to the vehicle 100. The localization controller 110 then e.g., controls the operation of the vehicle 110 in accordance with the at least one operational rule by restricting the speed of movement of the vehicle 100 accordingly, e.g., by providing the at least one operational rule to the vehicle control system 140. This action is related to Action 203 described above.

**S36a.** The localization controller 110 may then determine that the location of the vehicle 100 is reliable. This may comprise obtaining, e.g., receiving, determining, calculating and/or estimating, an updated location of the vehicle 100, and determining whether or not the updated location is reliable. Determining whether or not the updated location is reliable may be done similarly and/or in the same way as described in Action 201 for the obtained location.

**S37a.** When having determined that updated location of the vehicle 100 is reliable, the localization controller 110 may provide, such as send, transmit and/or communicate, the updated location to the TMS 160 and/or directly to the other vehicles in the fleet of vehicles, together with an indication indicating that the updated location is reliable. This may allow the TMS 160 to provide an indication indicating that the that location of the vehicle 100 is reliable to other vehicles in the fleet of vehicles.

**S38a.** Furthermore, when having determined that location of the vehicle 100 is reliable, the localization controller 110 may stop operating the vehicle 100 in accordance with the obtained operational rule. This action is related to Action 204 described above.

**Fig. 3b** exemplifies embodiments where the localization controller 100 handles control of the vehicle 100 based on an unreliable location of another vehicle in the fleet of vehicles. The example comprises the following actions, which may be taken in any suitable order.

**S31b.** At this step the localization controller 110 in the vehicle 100 obtains, e.g., receives, determines, calculates and/or estimates, a location of another vehicle in the fleet of vehicles. According to some examples of embodiments, the localization controller 110 obtains, e.g., receives, determines, calculates and/or estimates, an unreliable location indication, e.g. an indication indicating that the obtained location is unreliable, together with the location. Alternatively, only the unreliable location indication is obtained. This step is related to Action 201 described above.

**S32b.** When having determined that the location of the other vehicle in the fleet of vehicles is unreliable, e.g., based on the obtained location and/or unreliable location indication, the localization controller 110 obtains, e.g., selects, receives, generates, determines, an operational rule, such as the at least one operational rule, from the set of predetermined operational rules. For example, the conditions being fulfilled may be that the vehicle 100 is a first type of predefined vehicle and that the vehicle 100 performs a first type of task. The localization controller 110 obtains the operational rule by selecting the operational rule from the predetermined set of operation rule taking the conditions being fulfilled into account. This step is related to Action 202 described above.

**S33b.** The localization controller 110 operates, such as controls the operation of, the vehicle 100 in accordance with the obtained operational rule and/or rules. For example, the at least one operational rule may indicate that the vehicle 100 may perform its current operation with a restricted speed of movement. The localization controller 110 then e.g., controls the operation the vehicle 110 in accordance with the at least one operational rule by restricting the speed of movement of the vehicle 100 accordingly, e.g., by providing the at least one operational rule to the vehicle control system 140. This step is related to Action 203 described above.

**S34b.** The localization controller 110 may obtain, e.g., receive, determine, calculate and/or estimate, an updated location of the other vehicle in the fleet of vehicles, e.g. together with a reliable location indication, e.g. an indication indicating that the obtained location is reliable, from the TMS 160.

**S35b.** When having determined that location of the other vehicle in the fleet of vehicles is reliable, e.g. based on the obtained updated location and/or reliable location indication of the other vehicle in the fleet of vehicles, the localization controller 110 may stop operating, such as control the operation of, the vehicle 100 in accordance with the obtained operational rule. This step is related to Action 204 described above.

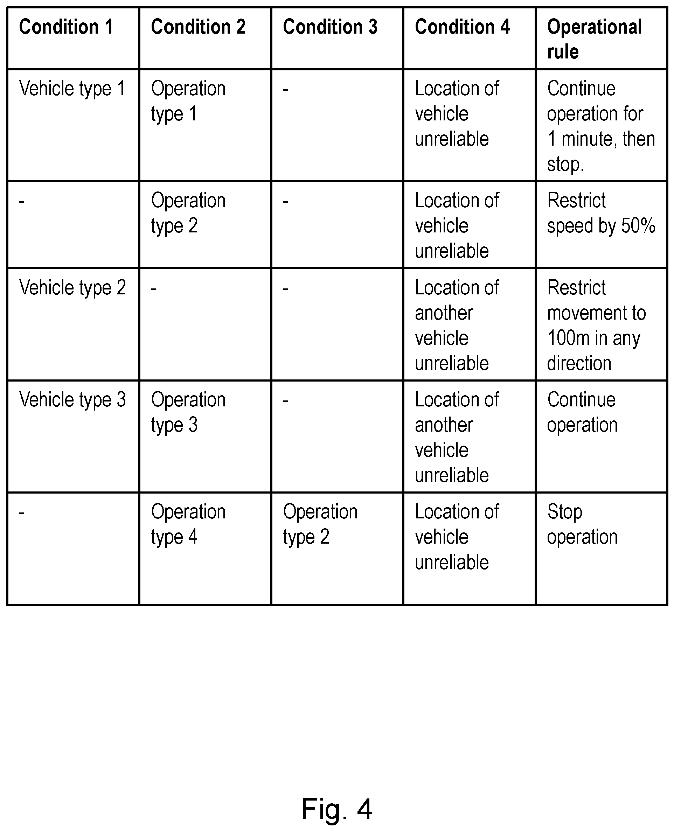

**Fig. 4** shows an example table of a set of predetermined operational rules obtainable by a localization controller, e.g., the localization controller 110 described in relation to Fig. 1a. As may be seen from Fig. 4, different combinations of conditions being fulfilled result in the localization controller 110 selecting different operational rules. Condition 1 represents the type of vehicle of the vehicle 100. Conditions 2 represents the type of operation performed by the vehicle 100. Condition 3 represents the type of operation performed by another vehicle reporting an unreliable location in the fleet of vehicles. Condition 4 represents the unreliable location being related to the vehicle 100 or to another vehicle in the fleet of vehicles. E.g., the localization controller of vehicle 100 determiners that the location of the vehicle 100 is unreliable, the vehicle 100 is a vehicle type 1, e.g., a 'loader', and the operation performed by the vehicle 100 is operation type 1, e.g., 'loading'. The localization controller 110 then selects the operational rule associated to these conditions being fulfilled, such as continue the operation for 1 minute and then stop according to the example in Fig. 4. According to another example, the conditions being fulfilled may be that the vehicle 100 is a vehicle type 2, e.g., 'dumper', and that the localization controller 110 has determined that the location of another vehicle in the fleet of vehicles is unreliable. According to the example table in Fig. 4, the localization controller 110 then selects an operational rule that restricts movement of the vehicle 100 to 100 meters in any direction. According to another example, the conditions being fulfilled may be that the vehicle 100 is a vehicle type 3, e.g., a 'drill rig', that the operation performed by the vehicle 100 is operation type 3, e.g., 'drilling', and that the localization controller 110 has determined that the location of the vehicle 100 is unreliable. According to the example table in Fig. 4, the localization controller 110 then selects an operational rule that allows the vehicle 100 to continue the current operation. According to another example, the conditions being fulfilled may be that the operation performed by the vehicle 100 is operation type 4, e.g., 'tramming', the operation performed by another vehicle reporting an unreliable location in the fleet of vehicles is operation type 2, e.g., 'dumping', and that the unreliable location is related to the other vehicle in the fleet of vehicles. According to the example table in Fig. 4, the localization controller 110 then selects an operational rule that stops the operation of the vehicle 100.

Other combinations of conditions are possible, as well as other types of operational rules. Further, an operational rule is not limited to be based on four conditions, more or less conditions is possible, and other conditions the conditions exemplified here is possible. The table shown in Fig. 4 is to be viewed as an example, and not restricting to the scope of the invention.

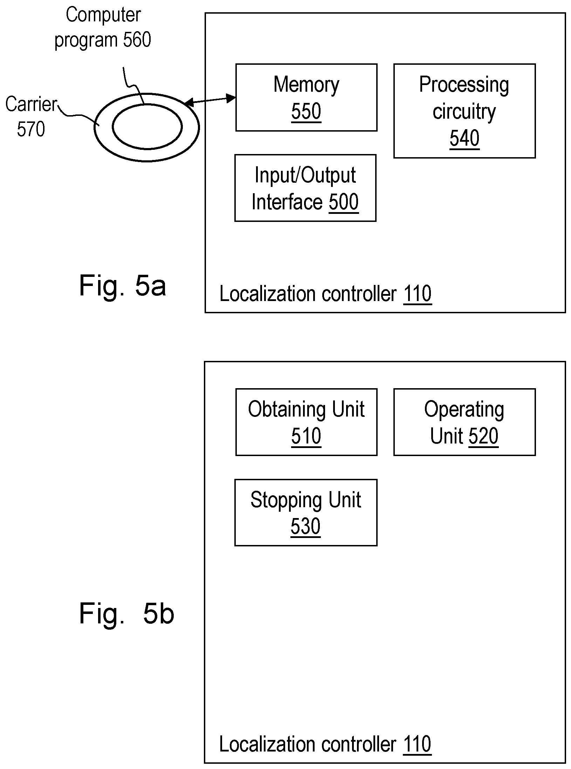

Figure **5a** disclose an example configuration of a localization controller, e.g., the localization controller 110 described in the detailed description of Fig. 1a. The localization controller 110 is configured to handle control of a vehicle adapted to operate in a mining environment. The vehicle and mining environment may be the vehicle 100 and mining environment 130 described in reference to Figs. 1a and 1b. The vehicle 100 is adapted to be a member of the fleet of vehicles. The localization controller 110 comprises a memory 550 operable to store instructions and processing circuitry 540 operable to execute the instructions. The localization controller 110 may be located, e.g., comprised, in a plurality of vehicles or in each vehicle in a fleet of vehicles. Alternatively, the localization controller 110 may be located in only one vehicle, e.g., the vehicle 100, in the fleet of vehicles. In this scenario, the localization controller 110 in the vehicle 100 may communicate with a vehicle control system, e.g., the vehicle control system 140 described in the detailed description of Fig. 1a, in vehicle 100 and the other vehicles in the fleet of vehicles. Alternatively, the localization controller 110 may be partly or completely located in a remote system. In this scenario, the localization controller 110 in the vehicle 100 may communicate with the vehicle control system 140 in the vehicle 100 and in the other vehicles in the fleet of vehicles.

The localization controller 110 may comprise **an input and output interface 500** configured to communicate with e.g. the vehicle control system 140 in the vehicle 100 and the vehicle control system 140 in other vehicles in the fleet of vehicles, a Traffic Management System (TMS), e.g., the TMS 160 described in the detailed description of Fig. 1a, distributed parts of the localization controller 110 and with other systems, nodes and/or equipment in the mining environment 130.

**Fig. 5b** also discloses an example configuration of processing circuitry for a localization controller, e.g., the processing circuitry 540 disclosed in Fig. 5a.

The localization controller 110 is configured to, e.g. by means of an **obtaining unit 510** in the gateway node 110, obtain the location of the vehicle 100 and/or of another vehicle in the fleet of vehicles.

The localization controller 110 may determine that the location of another vehicle in fleet of vehicles is unreliable by obtaining an indication indicating that the location of the other vehicle is unreliable.

The localization controller 110 may be configured to obtain the location of the vehicle 100 and/or of another vehicle in the fleet of vehicles by being configured to obtain an indication indicating that the location of the vehicle 100 and/or the location of the other vehicle is unreliable. The location of the vehicle 100 and/or the location of another vehicle in fleet of vehicles may be adapted to be determined to be unreliable based on the obtained indication.

A probability that the location is reliable or unreliable may be calculated by the localization controller 110 based on an operation performed by the vehicle 100 and/or a previously obtained location of the vehicle 100. The localization controller 110 may be configured to determine that the location is unreliable using a threshold.

The localization controller 110 is configured to, e.g. by means of the **obtaining unit 510** in the localization controller 110, when determined that the obtained location is unreliable, obtain at least one operational rule from the set of predetermined operational rules. The at least one operational rule is selected from the set of predetermined operational rules based on whether the one or more conditions are fulfilled or not.

The at least one operational rule may be obtained from the memory 550 comprised in the localization controller 110 or accessible to the localization controller 110. The memory is adapted to store the set of predetermined operational rules.

The at least one operational rule may comprise one or more allowed and/or disallowed operations.

The one or more conditions may comprise one or more out of:
- a type of operation being performed by the vehicle 100,
- a type of operation being performed by another machine and reporting unreliable localization in the fleet of vehicles,
- the type of vehicle of the vehicle 100,
- the type of vehicle of another vehicle in the fleet of vehicles, and
- the unreliable location being related to the vehicle 100 or to another vehicle in the fleet of machines.

The at least one operational rule may comprise a time period.

The localization controller 110 is further configured to, e.g. by means of an **operating unit 520** in the localization controller 110, operate the vehicle 100 and/or another vehicle in the fleet of vehicles in accordance with the obtained at least one operational rule.

The localization controller 110 may be configured to, e.g. by means of an **stopping unit 530** in the localization controller 110, determine that an updated location of the vehicle 100 and/or the other vehicle is reliable, and then stopping to operate the vehicle 100 and/or the other vehicle in the fleet of vehicles in accordance with the obtained at least one operational rule.

The embodiments herein may be implemented through the processing circuitry 540 in the localization controller 110 depicted in Figure 5a, together with respective computer program code for performing the functions and actions of the embodiments herein. The processing circuitry 540 may be comprised of one or more processors. The program code mentioned above may also be provided as a computer program product, for instance in the form of a data carrier carrying computer program code for performing the embodiments herein when being loaded into the localization controller 110. One such carrier may be in the form of a CD ROM disc. It is however feasible with other data carriers such as a memory stick. The computer program code may furthermore be provided as pure program code on a server and downloaded to the localization controller 110.

The memory 550 of the localization controller 110 may further comprise one or more memory units. The memory 550 is configured to store instructions executable by the processing circuitry 540. The memory 550 is arranged to be used to store e.g. information, messages, indications, configurations, thresholds, operational rules, time periods, conditions, locations, safety areas, sensor data and applications to perform the methods herein when being executed in the localization controller 110.

In some embodiments, a computer program 560 comprises instructions, which when executed by the processing circuitry 540, e.g., of the respective at least one processor of the processing circuitry 540, cause the processing circuitry 540 of the localization controller 110 to perform the actions above.

In some embodiments, a respective carrier 570 comprises the respective computer program 560, wherein the carrier 570 is one of an electronic signal, an optical signal, an electromagnetic signal, a magnetic signal, an electric signal, a radio signal, a microwave signal, or a computer-readable storage medium.

Those skilled in the art will appreciate that the units in the localization controller 110 described above may refer to a combination of analog and digital circuits, and/or one or more processors configured with software and/or firmware, e.g. stored in the localization controller 110, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

## Claims

1. A method performed by a localization controller (110) for handling control of a vehicle (100) operating in a mining environment (130), the vehicle (100) being a member of a fleet of vehicles, the method comprising:
*obtaining* (201) a location of the vehicle (100) and/or a location of another vehicle in the fleet of vehicles, the method being **characterised in that**:
when determined that the obtained location is unreliable, *obtaining* (202) at least one operational rule from a set of predetermined operational rules, which at least one operational rule is selected from the set of predetermined operational rules based on whether one or more conditions are fulfilled or not, wherein the one or more conditions comprises one or more out of:
- a type of operation being performed by the vehicle (100),
- a type of operation being performed by another vehicle in the fleet of vehicles,
- a type of vehicle (100), and
- a type of vehicle of another vehicle in the fleet of vehicles, and
*operating* (203) the vehicle (100) and/or another vehicle in the fleet of vehicles in accordance with the at least one operational rule.

2. The method according to claim 1, wherein the at least one operational rule is obtained from a memory 550 comprised in the localization controller (110) or accessible to the localization controller (110), and wherein the memory is storing the set of predetermined operational rules.

3. The method according to any of claims 1-2, wherein the at least one operational rule comprises one or more allowed and/or disallowed operations.

4. The method according to any of claims 1-3, wherein the one or more conditions further comprises
the unreliable location being related to the vehicle (100) and/or to another vehicle in the fleet of vehicles.

5. The method according to any of claims 1-4, wherein the at least one operational rule comprises a time period.

6. The method according to any of claims 1-5, wherein *obtaining* (201) the location of the vehicle (100) and/or of another vehicle in the fleet of vehicles comprises obtaining an indication indicating that the location of the vehicle (100) and/or the location of the other vehicle is unreliable, and wherein the location of the vehicle 100 and/or the location of another vehicle in the fleet of vehicles is determined to be unreliable based on the obtained indication.

7. The method according to any of claims 1-6, wherein a probability that the location is reliable or unreliable is calculated based on an operation performed by the vehicle (100) and/or a previously obtained location of the vehicle (100), and wherein it is determined that the location is unreliable using a threshold.

8. The method according to claim 1-7, further comprising:
determining that an updated location of the vehicle (100) and/or the other vehicle is reliable, and then *stopping* (204) to operate the vehicle (100) and/or the other vehicle in the fleet of vehicles in accordance with the obtained at least one operational rule.

9. A computer program (560) comprising instructions, which when executed by a processing circuitry (540), causes the processing circuitry (540) to perform actions according to any of the claims 1-8.

10. A carrier (570) comprising the computer program (560) of claim 9, wherein the carrier (570) is one of an electronic signal, an optical signal, an electromagnetic signal, a magnetic signal, an electric signal, a radio signal, a microwave signal, or a computer-readable storage medium.

11. A localization controller (110) configured to handle control of a vehicle (100) adapted to operate in a mining environment (130), the vehicle (100) adapted to be a member of a fleet of vehicles, the localization controller (110) comprising a memory 550 operable to store instructions and processing circuitry (540) operable to execute the instructions, such that the localization controller (110) is operable to:
obtain a location of the vehicle (100) and/or a location of another vehicle in the fleet of vehicles, the localization controller being **characterised in that**:
when determined that the obtained location is unreliable, obtain at least one operational rule from a set of predetermined operational rules, which at least one operational rule is selected from the set of predetermined operational rules based on whether one or more conditions are fulfilled or not, wherein the one or more conditions is adapted to comprise one or more out of:
- a type of operation being performed by the vehicle (100),
- a type of operation being performed by another vehicle in the fleet of vehicles,
- a type of vehicle (100), and
- a type of vehicle of another vehicle in the fleet of vehicles, and
operate the vehicle (100) and/or another vehicle in the fleet of vehicles in accordance with the obtained at least one operational rule.

12. The localization controller according to claim 11, wherein the processing circuitry (540) is further operable to execute the instructions such that the localization controller (110) is further operable to perform the method according to any of the claims 2-8.

13. A vehicle (100) adapted to operate in a mining environment (130), the vehicle (100) being part of a fleet of vehicle, comprising a localization controller (110) according to any of the claims 11-12.

## Patentansprüche

1. Verfahren, das von einer Lokalisierungssteuereinheit (110) zur Steuerung eines in einer Bergbauumgebung (130) betriebenen Fahrzeugs (100) durchgeführt wird, wobei das Fahrzeug (100) Teil einer Fahrzeugflotte ist, das Verfahren umfassend:
*Erhalten* (201) eines Standorts des Fahrzeugs (100) und/oder eines Standorts eines anderen Fahrzeugs in der Fahrzeugflotte, wobei das Verfahren **gekennzeichnet ist, durch**
wenn bestimmt wird, dass der ermittelte Standort unzuverlässig ist, *Erhalten* (202) mindestens einer Betriebsregel aus einem Satz vorbestimmter Betriebsregeln, wobei die mindestens eine Betriebsregel aus dem Satz vorbestimmter Betriebsregeln ausgewählt wird, basierend darauf, ob eine oder mehrere Bedingungen erfüllt sind oder nicht, wobei die einen oder mehreren Bedingungen eines oder mehrere umfassen aus:
- eine Art von Vorgang, der vom Fahrzeug (100) ausgeführt wird,
- eine Art von Vorgang, der von einem anderen Fahrzeug in der Fahrzeugflotte ausgeführt wird,
- eine Art von Fahrzeug (100), und
- eine Art von Fahrzeug eines anderen Fahrzeuges aus der Fahrzeugflotte, und
*Betreiben* (203) des Fahrzeugs (100) und/oder eines anderen Fahrzeugs in der Fahrzeugflotte nach der mindestens einen Betriebsregel.

2. Verfahren nach Anspruch 1, wobei die mindestens eine Betriebsregel aus einem Speicher 550 erhalten wird, der in der Lokalisierungssteuereinheit (110) umfasst ist oder für die Lokalisierungssteuereinheit (110) zugänglich ist, und wobei der Speicher den Satz vorbestimmter Betriebsregeln speichert.

3. Verfahren nach einem der Ansprüche 1-2, wobei die mindestens eine Betriebsregel eine oder mehrere erlaubte und/oder unzulässige Operationen umfasst.

4. Verfahren nach einem der Ansprüche 1-3, wobei die eine oder die mehreren Bedingungen weiter
die unzuverlässige Position in Bezug auf das Fahrzeug (100) und/oder ein anderes Fahrzeug in der Fahrzeugflotte umfassen.

5. Verfahren nach einem der Ansprüche 1-4, wobei die mindestens eine Betriebsregel einen Zeitraum umfasst.

6. Verfahren nach einem der Ansprüche 1-5, wobei das *Erhalten* (201) der Position des Fahrzeugs (100) und/oder eines anderen Fahrzeugs in der Fahrzeugflotte das Erhalten einer Angabe umfasst, die angibt, dass die Position des Fahrzeugs (100) und/oder die Position des anderen Fahrzeugs unzuverlässig ist , und wobei die Position des Fahrzeugs 100 und/oder die Position eines anderen Fahrzeugs in der Fahrzeugflotte basierend auf den erhaltenen Angaben als unzuverlässig bestimmt wird.

7. Verfahren nach einem der Ansprüche 1-6, wobei eine Wahrscheinlichkeit, dass die Position zuverlässig oder unzuverlässig ist, auf der Grundlage einer vom Fahrzeug (100) durchgeführten Operation und/oder einer zuvor ermittelten Position des Fahrzeugs (100) berechnet wird, und wobei anhand eines Schwellenwerts bestimmt wird, dass der Standort unzuverlässig ist.

8. Verfahren nach Anspruch 1-7, weiter umfassend:
Bestimmen, dass eine aktualisierte Position des Fahrzeugs (100) und/oder des anderen Fahrzeugs zuverlässig ist, und dann *Anhalten* (204), um das Fahrzeug (100) und/oder das andere Fahrzeug in der Fahrzeugflotte nach der mindestens einen erhaltenen Betriebsregel zu betreiben.

9. Computerprogramm (560) umfassend Befehle , die, wenn sie von einer Verarbeitungsschaltung (540) ausgeführt werden, die Verarbeitungsschaltung (540) veranlassen, Aktionen nach einem der Ansprüche 1 bis 8 auszuführen.

10. Träger (570), der das Computerprogramm (560) nach Anspruch 9 umfasst, wobei der Träger (570) eines von einem elektronischen Signal, einem optischen Signal, einem elektromagnetischen Signal, einem magnetischen Signal, einem elektrischen Signal, einem Funksignal, einem Mikrowellensignal oder einem computerlesbaren Speichermedium ist.

11. Lokalisierungssteuereinheit (110), die zur Steuerung eines Fahrzeugs (100) konfiguriert ist, das für den Betrieb in einer Bergbauumgebung (130) ausgelegt ist, wobei das Fahrzeug (100) als Teil einer Fahrzeugflotte ausgelegt ist, wobei die Lokalisierungssteuereinheit (110) einen Speicher 550 zum Speichern von Befehlen und eine Verarbeitungsschaltung (540) zum Ausführen der Befehle umfasst. so dass die Lokalisierungssteuereinheit (110) betreibbar ist, um:
einen Standort des Fahrzeugs (100) und/oder einen Standort eines anderen Fahrzeugs in der Fahrzeugflotte zu ermitteln, wobei die Lokalisierungssteuereinheit **gekennzeichnet ist, durch**
wenn bestimmt wird, dass der ermittelte Standort unzuverlässig ist, Ermitteln mindestens einer Betriebsregel aus einem Satz vorbestimmter Betriebsregeln, wobei mindestens eine Betriebsregel aus dem Satz vorbestimmter Betriebsregeln ausgewählt wird, basierend darauf, ob eine oder mehrere Bedingungen erfüllt sind oder nicht, wobei die eine oder die mehreren Bedingungen so angepasst sind, dass sie eine oder mehrere der folgenden Bedingungen umfassen:
- eine Art von Vorgang, der vom Fahrzeug (100) ausgeführt wird,
- eine Art von Vorgang, der von einem anderen Fahrzeug in der Fahrzeugflotte ausgeführt wird,
- eine Art von Fahrzeug (100), und
- eine Art von Fahrzeug eines anderen Fahrzeugs in der Fahrzeugflotte und Betreiben des Fahrzeug (100) und/oder eines anderen Fahrzeugs in der Fahrzeugflotte in nach der mindestens einen erhaltenen Betriebsregel.

12. Lokalisierungssteuereinheit nach Anspruch 11, wobei die Verarbeitungsschaltung (540) weiter betreibbar ist, um die Befehle auszuführen, so dass die Lokalisierungssteuereinheit (110) weiter betreibbar ist, um das Verfahren nach einem der Ansprüche 2 bis 8 durchzuführen.

13. Fahrzeug (100), das für den Betrieb in einer Bergbauumgebung (130) ausgelegt ist, wobei das Fahrzeug (100) Teil einer Fahrzeugflotte ist, umfassend eine Lokalisierungssteuereinheit (110) nach einem der Ansprüche 11-12.

## Revendications

1. Procédé réalisé par un dispositif de commande de localisation (110) pour gérer la commande d'un véhicule (100) fonctionnant dans un environnement minier (130), le véhicule (100) étant un membre d'une flotte de véhicules, le procédé comprenant :
*l'obtention* (201) d'un emplacement du véhicule (100) et/ou d'un emplacement d'un autre véhicule de la flotte de véhicules, le procédé étant **caractérisé en ce que** :
lorsqu'il est déterminé que l'emplacement obtenu n'est pas fiable, *l'obtention* (202) d'au moins une règle opérationnelle parmi un ensemble de règles opérationnelles prédéterminées, laquelle au moins une règle opérationnelle est sélectionnée dans l'ensemble de règles opérationnelles prédéterminées sur la base du fait qu'une ou plusieurs conditions sont remplies ou non, dans lequel les une ou plusieurs conditions comprennent une ou plusieurs parmi :
- un type d'opération en cours de réalisation par le véhicule (100),
- un type d'opération en cours de réalisation par un autre véhicule de la flotte de véhicules,
- un type de véhicule (100), et
- un type de véhicule d'un autre véhicule de la flotte de véhicules, et
*l'exploitation* (203) du véhicule (100) et/ou d'un autre véhicule de la flotte de véhicules conformément à l'au moins une règle opérationnelle.

2. Procédé selon la revendication 1, dans lequel l'au moins une règle opérationnelle est obtenue à partir d'une mémoire (550) comprise dans le dispositif de commande de localisation (110) ou accessible par le dispositif de commande de localisation (110), et dans lequel la mémoire stocke l'ensemble de règles opérationnelles prédéterminées.

3. Procédé selon l'une quelconque des revendications 1 à 2, dans lequel l'au moins une règle opérationnelle comprend une ou plusieurs opérations autorisées et/ou interdites.

4. Procédé selon l'une quelconque des revendications 1 à 3, dans lequel les une ou plusieurs conditions comprennent en outre
le fait que l'emplacement non fiable est lié au véhicule (100) et/ou à un autre véhicule de la flotte de véhicules.

5. Procédé selon l'une quelconque des revendications 1 à 4, dans lequel l'au moins une règle opérationnelle comprend une période de temps.

6. Procédé selon l'une quelconque des revendications 1 à 5, dans lequel *l'obtention* (201) de l'emplacement du véhicule (100) et/ou d'un autre véhicule de la flotte de véhicules comprend l'obtention d'une indication indiquant que l'emplacement du véhicule (100) et/ou l'emplacement de l'autre véhicule ne sont pas fiables, et dans lequel l'emplacement du véhicule (100) et/ou l'emplacement d'un autre véhicule dans la flotte de véhicules sont déterminés comme non fiables sur la base de l'indication obtenue.

7. Procédé selon l'une quelconque des revendications 1 à 6, dans lequel une probabilité que l'emplacement soit fiable ou non fiable est calculée sur la base d'une opération réalisée par le véhicule (100) et/ou d'un emplacement précédemment obtenu du véhicule (100), et dans lequel il est déterminé que l'emplacement n'est pas fiable à l'aide d'un seuil.

8. Procédé selon l'une quelconque des revendications 1 à 7, comprenant en outre :
la détermination qu'un emplacement mis à jour du véhicule (100) et/ou de l'autre véhicule est fiable, puis *l'arrêt* (204) de l'exploitation du véhicule (100) et/ou de l'autre véhicule de la flotte de véhicules conformément à l'au moins une règle opérationnelle obtenue.

9. Programme informatique (560) comprenant des instructions, qui, lorsqu'elles sont exécutées par une circuiterie de traitement (540), amènent la circuiterie de traitement (540) à réaliser des actions selon l'une quelconque des revendications 1 à 8.

10. Support (570) comprenant le programme informatique (560) selon la revendication 9, dans lequel le support (570) est l'un parmi un signal électronique, un signal optique, un signal électromagnétique, un signal magnétique, un signal électrique, un signal radio, un signal micro-ondes ou un support de stockage lisible par ordinateur.

11. Dispositif de commande de localisation (110) configuré pour gérer la commande d'un véhicule (100) adapté pour fonctionner dans un environnement minier (130), le véhicule (100) étant adapté pour être membre d'une flotte de véhicules, le dispositif de commande de localisation (110) comprenant une mémoire (550) exploitable pour stocker des instructions et une circuiterie de traitement (540) exploitable pour exécuter les instructions, de sorte que le dispositif de commande de localisation (110) soit exploitable pour :
obtenir un emplacement du véhicule (100) et/ou un emplacement d'un autre véhicule de la flotte de véhicules, le dispositif de commande de localisation étant **caractérisé en ce que** :
lorsqu'il est déterminé que l'emplacement obtenu n'est pas fiable, obtenir au moins une règle opérationnelle parmi un ensemble de règles opérationnelles prédéterminées, laquelle au moins une règle opérationnelle est sélectionnée dans l'ensemble de règles opérationnelles prédéterminées sur la base du fait qu'une ou plusieurs conditions sont remplies ou non, dans lequel les une ou plusieurs conditions sont adaptées pour comprendre un ou plusieurs parmi :
- un type d'opération en cours de réalisation par le véhicule (100),
- un type d'opération en cours de réalisation par un autre véhicule de la flotte de véhicules,
- un type de véhicule (100), et
- un type de véhicule d'un autre véhicule de la flotte de véhicules, et exploiter le véhicule (100) et/ou un autre véhicule de la flotte de véhicules conformément à l'au moins une règle opérationnelle obtenue.

12. Dispositif de commande de localisation selon la revendication 11, dans lequel la circuiterie de traitement (540) est en outre exploitable pour exécuter les instructions de sorte que le dispositif de commande de localisation (110) soit en outre exploitable pour réaliser le procédé selon l'une quelconque des revendications 2 à 8.

13. Véhicule (100) adapté pour fonctionner dans un environnement minier (130), le véhicule (100) faisant partie d'une flotte de véhicules, comprenant un dispositif de commande de localisation (110) selon l'une quelconque des revendications 11 à 12.
